# EUROPÄISCHE PATENTSCHRIFT

(11) **EP 0 855 304 B1**
(45) Veröffentlichungstag und Bekanntmachung des Hinweises auf die Patenterteilung: **24.11.1999**
(21) Anmeldenummer: 98100649.7
(22) Anmeldetag: 15.01.1998
(51) Int. Cl.: B60K 11/04

(54) **Kühlmodul**
Cooling module
Module de refroidissement

(30) Priorität: 23.01.1997 DE 19702183
(43) Veröffentlichungstag der Anmeldung: 29.07.1998
(73) Patentinhaber: Modine Manufacturing Company, Racine, Wisconsin 53403-2552 (US); Bayerische Motoren Werke Aktiengesellschaft, 80788 München (DE)
(72) Erfinder: Eckerskorn, Winfrid, 85521 Ottobrunn (DE); Temmesfeld, Axel, 83064 Raubling (DE); Kalbacher, Klaus, 72414 Rangendingen (DE); Schütterle, Karl, 72141 Waldorfhäslach (DE)
(74) Vertreter: Wolter, Klaus-Dietrich

(56) Entgegenhaltungen:
- EP-A- 0 661 186
- GB-A- 2 182 008
- US-A- 4 979 584

## Beschreibung

Die Erfindung betrifft einen Kühlmodul mit den Merkmalen im Oberbegriff von Anspruch1. Dieses Kühlmodul geht prinzipiell aus dem EP 661 186 A1 hervor. Allerdings hat das bekannte Kühlmodul außer dem Wasserkühler keine zusätzlichen Wärmetauscher. Als Montageplatte könnten die angeformten Tragarme angesehen werden, die zur Befestigung am Wasserkasten des Wasserkühlers vorgesehen und scheinbar so gestaltet sind, daß sie für Wasserkühler unterschiedlicher Größe zu verwenden sind. Ferner sind die Tragarme so ausgebildet, daß sich Montagegehäuse unterschiedlicher Größe und Gestalt für Antriebsmotore des Ventilators von verschiedener Größe daran befestigen lassen.

Aus der DE-OS 40 39 490 ist ein weiteres Kühlaggregat für einen Kraftfahrzeugmotor bekannt. Der Wasserkühler wird hier von einer Ventilatorhaube eingefaßt, die für zwei nebeneinander angeordnete Lüfter ausgebildet ist. Zwischen dem Wasserkühler und der Ventilatorhaube verbleibt ein Spalt, in dem ein Kondensator angeordnet und an der Ventilatorhaube befestigt ist. Zur Befestigung sind an der Ventilatorhaube Tragplatten mit Steckzapfen angeformt. Die Lage der Steckzapfen ist an die Lage der Bohrungen in den Befestigungslaschen des Kondensators angepaßt, so daß eine sichere Arretierung des Kondensators möglich ist. Hier verbleibt zur Befestigung weiterer Wärmetauscher an der Ventilatorhaube ein freier Spalt zwischen Wasserkühler und dem weiteren Wärmetauscher und der Ventilatorhaube.

Ähnlich wie in der DE-PS 40 39 490 der Kondensator befestigt ist, wurde in der mit DE-PS 42 44 039 offenbarten Lösung ein Ölkühler zwischen dem Wasserkühler und der Ventilatorhaube angeordnet, dessen Befestigung jedoch aus diesem Dokument nicht hervorgeht. Darüber hinaus gehören in vielen Fällen noch andere Wärmetauscher zu dem Kühlmodul, die so anzuordnen sind, daß das Kühlmodul seine kompakte Bauweise nicht einbüßt. Dazu sind in dem zuerst genannten Dokument keine Vorkehrungen getroffen worden. Diese zusätzlichen Wärmetauscher, beispielsweise Ölkühler, werden oft separat an Bauteilen des Fahrzeuges befestigt, die mit Schlauchleitungen am Kühlkreislauf angeschlossen sind, wodurch die Vormontage des Kühlmoduls aber vor allem die Endmontage im Fahrzeug aufwendiger wird.

In dem zuletzt genannten Dokument ist als zusätzlicher Wärmetauscher ein Ladeluftkühler seitlich neben dem Wasserkühler angeordnet und mit demselben verbunden. Wünschenswert ist ein Kühlmodul, das recht viele Standardteile aufweist, die man verwenden kann, unabhängig davon, ob beispielsweise ein Getriebeölkühler, wie er besonders bei Motoren mit Automatikgetriebe notwendig ist, vorhanden ist oder nicht.

Es ist bekannt, die Ventilatorhaube sinnvoll zur Befestigung von zum Kühlmodul gehörenden Bauteilen zu benutzen. Beispielsweise hat man bei dem aus der DE-PS 39 03 199 bekanntgewordenen Kühler-Lüfter-Aggregat einen Signalgeber als Teil eines elektrischen Regelkreises an der Ventilatorhaube befestigt.

Die Aufgabe der Erfindung besteht in einem kompakten und servicefreundlichen Kühlmodul mit hoher Effizienz hinsichtlich der Kühlleistung, bei dem zusätzliche Wärmetauscher leicht hinzugefügt oder weggelassen werden können, ohne die Grundkonzeption zu verlassen. Erfindungsgemäß gelöst ist diese Aufgabe durch die Merkmale des Anspruchs 1. Die Ansprüche 2 bis 12 betreffen Varianten und vorteilhafte Ausgestaltungen.

Die als Teil der Ventilatorhaube ausgebildete Montageplatte ist ein Multifunktionsteil, das auf einer Seite als Ventilatorhaube wirkt aber auf der anderen Seite als Träger einer Reihe von Bauteilen ausgebildet ist, wobei diese Bauteile, wahlweise, je nach Bedarf, angebaut werden können - bei gleicher Grundkonzeption der Montageplatte und des Kühlmoduls. Hauptsächlich diese gefundene Ausbildung der Ventilatorhaube bzw. Montageplatte gewährleistet die kompakte und platzsparende Ausführung des Kühlmoduls, denn zusätzliche Komponenten, beispielsweise Wärmetauscher, Ventileinheit und Ausgleichsbehälter sind direkt und in unmittelbarer Nähe des Wasserkühlers an der Montageplatte angeordnet, ohne daß zusätzliche Leitungen notwendig sind. Ein Wärmetauscher ist direkt mittels Steckverbindungen an der Montageplatte befestigt, wodurch er auch auf kürzestem Weg mit der Kühlflüssigkeit aus dem Wasserkühler versorgt werden kann. Dies dient außerdem dem effizienten Wärmeaustausch. Die Strömungskanäle befinden sich direkt an der Montageplatte bzw. sie stellen einen Teil derselben dar.

Auf der zum Wasserkühler weisenden Seite der Montageplatte ist ein Anschlußstutzen angeformt. Dieser Anschlußstutzen verbindet die Strömungskanäle und die im Aufnahmestutzen befindliche Ventileinheit direkt mit dem Wasserkühler. Dazu ist in einem Wasserkasten des Wasserkühlers eine entsprechende Anschlußöffnung angeordnet, in die der Anschlußstutzen bei der Vormontage des Kühlmoduls abdichtend eingesetzt wird.

Die Montageplatte ist in ihrer Grundversion stets gleich konfiguriert und ist ein kostengünstiges Standardteil. Soll zum Beispiel ein Ölkühler vorgesehen werden, wie er bei Fahrzeugen mit Automatikgetriebe notwendig ist, wird lediglich ein zusätzlicher Deckel verwendet, der an der Montageplatte befestigt ist und der auf einer Seite den Befestigungspunkt und die Anschlußstutzen für den Ölkühler aufweist. Auf der anderen Deckelseite sind die mit den Anschlußstutzen in Verbindung stehenden Strömungskanäle eingearbeitet. Wahlweise könnten Teile der Strömungskanäle auch an der Montageplatte angespritzt sein. Bei der Version mit Schaltgetriebe werden die Strömungskanäle nicht benötigt, weil auch der Wärmetauscher (Ölkühler) nicht vorgesehen werden muß. Anstelle des Deckels mit dem Anschlußstutzen wird lediglich ein anderer Anschlußstutzen verwendet, wobei die gleiche Montageplatte eingesetzt werden kann. Der zuvor erwähnte Anschlußstutzen an der Montageplatte ist in diesem Fall blind gesetzt.

Im Bedarfsfall kann gemäß der Erfindung die gesamte Ventilatorhaube als Montageplatte verwendet werden und Träger von Komponenten des Kühlmoduls sein.

Die Ansprüche 2 und 3 stellen Varianten dar, die aus fertigungstechnischen Gründen vorteilhatt sein können. Dies wird von der Frage der Werkzeugkosten für die Herstellung der Kunststoffteile abhängen.

Als eine Komponente des Kühlmoduls, die an der Montageplatte angeordnet wird, kommt der Ausgleichsbehälter des Wasserkühlers und der eine Ventileinheit aufnehmende Anschlußstutzen in Betracht. Es wird eine keine Verbindungsleitungen aufweisende Anordnung vorgeschlagen, bei der der Ausgleichsbehälter mit einem Anschlußstutzen auf dem die Ventileinheit aufnehmenden Anschlußstutzen lediglich aufgesteckt werden muß. Ein weiterer Vorteil des vorgeschlagenen Kühlmoduls kann darin gesehen werden, daß durch die Verwendung der gleichen Montageplatte für beide beschriebenen Versionen auch ständig die gleiche Ventilatorhaube zum Einsatz kommen kann.

Gegenüber den bekannten Kassetten- oder Rahmenlösungen wird ebenfalls weniger Raum beansprucht.

Nachfolgend wird die Erfindung in einem Ausführungsbeispiel erläutert. Dazu wird auf die beiliegenden Zeichnungen Bezug genommen.

Es zeigen:
- Fig. 1: eine auseinander gezogene Darstellung des Kühlmoduls mit Komponenten, Ventilatorhaube und Montageplatte
- Fig. 2: Ausschnitt der Montageplatte mit Ausgleichsbehälter
- Fig. 3: Ventilatorhaube und Montageplatte als ein Bauteil

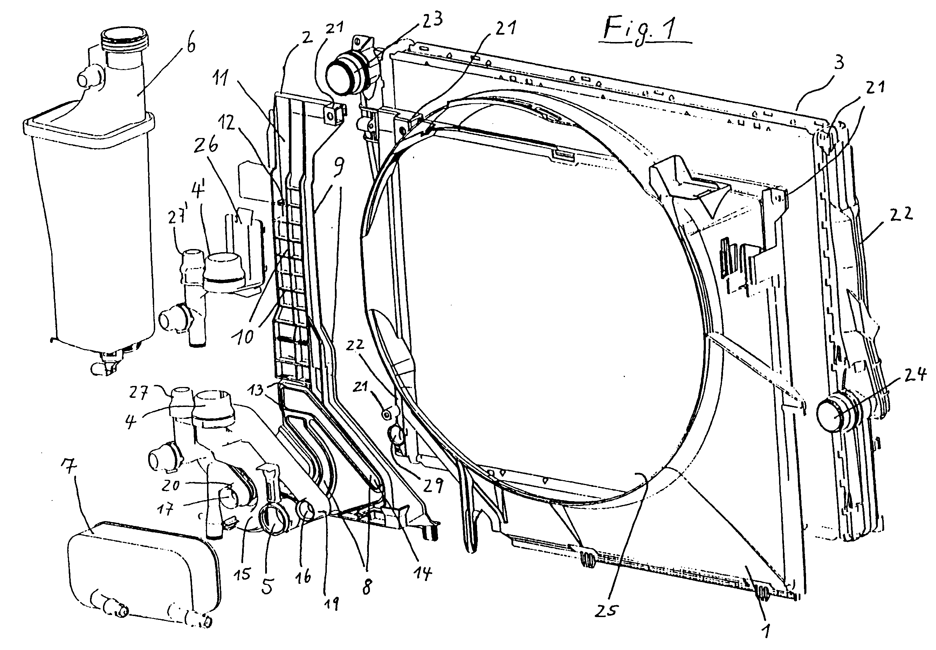

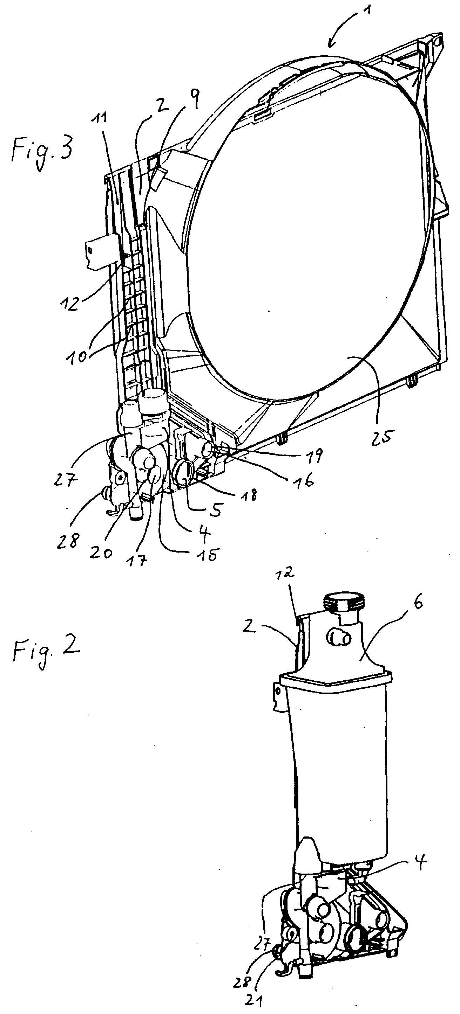

Die Fig. 1 zeigt die zum Verständnis der Erfindung notwendigen Einzelheiten. In diesem Ausführungsbeispiel stellen die Ventilatorhaube 1 und die Montageplatte 2 zwei Einzelteile dar, die zusammengefügt werden. Im Gegensatz dazu, zeigt die weiter unten erläuterte Fig.3 eine Ventilatorhaube 1, die zusammen mit der Montageplatte 2 ein einheitliches Bauteil darstellt. Die Ventilatorhaube 1 und die Montageplatte 2 sind mittels geeigneter Verbindungselemente 21 am Wasserkühler 3 befestigt. Dabei liegt die Montageplatte 2 in Fig. 1 im gesamten Stoßbereich bzw. an der konturmäßig angepaßten Nahtstelle 9 abdichtend an der Ventilatorhaube 1 an, um eine möglichst verlustarme Kühlluftführung zu bewirken. Die verlustarme Kühlluftführung wird auch dadurch sichergestellt, daß die Montageplatte 2 und die Ventilatorhaube 1 vorzugsweise unmittelbar an dem Wasserkühler 3 anliegen. Der Wasserkühler 3 ist hier als Querstromkühler ausgeführt, mit links und rechts angeordneten Wasserkästen 22 aus Kunststoff. Die Wasserkästen 22 sind auf einer Seite mit einem Kühlwasserzulauf 23 und auf der anderen Seite mit einem Ablauf 24 ausgebildet. Der in der zentralen Öffnung der Ventilatorhaube 1 angeordnete Ventilator wurde nicht gezeichnet, weil er im vorliegenden Zusammenhang keine Rolle spielt. Die Montageplatte 2 weist sich kreuzende Versteifungsrippen 10 auf, um für ihre Aufgabe als Täger von Komponenten des Kühlmoduls ausreichende Festigkeit bei gleichzeitig geringem Materialeinsatz zu besitzen.
Im unteren Bereich der Montageplatte 2 sind Strömungskanäle 8 angeordnet, deren Boden 14 unmittelbar durch die Wandung der Montageplatte 2 gebildet ist. Die Strömungskanäle 8 sind durch angespritzte Wände 13 begrenzt. Alternativ könnten sich diese Wände 13 auch am Deckel 15 befinden. (nicht gezeichnet) Deckel 15 bildet durch Zusammenfügen mit der Montageplatte 2 die Strömungskanäle 8 komplett aus. Mit 4 und 4' ist jeweils ein Aufnahmestutzen gekennzeichnet, wobei sie zwei unterschiedliche Varianten darstellen sollen, die vorteilhaft unter Verwendung gleicher Montageplatten 2 ausführbar sind. Der Anschlußstutzen 4, der sich direkt an dem Deckel 15 befindet, ist für die Variante mit einem Wärmetauscher 7, insbesondere einem Getriebeölkühler, gedacht. Diese Variante kommt insbesondere dann in Betracht, wenn das Kraftfahrzeug mit einem Automatikgetriebe ausgerüstet ist. Die zweite Variante, bei der das Fahrzeug ein Schaltgetriebe aufweist, benötigt keinen Ölkühler. Aus dem Grund wird auch der Deckel 15 mit dem Anschlußstutzen 4 nicht benötigt. Vielmehr kommt bei dieser Variante der Anschlußstutzen 4' zur Anwendung, der lediglich mit einem Halteteil 26 ausgerüstet ist, um damit an der Montageplatte 2 befestigt zu werden. Der Anschlußstutzen 4 ist dazu vorgesehen eine Ventileinheit aufzunehmen, die die Flüssigkeitsströme über den Wärmetauscher 7, insbesondere Ölkühler, steuert. Dazu befindet sich der Anschlußstutzen 4 oder auch der Anschlußstutzen 4'genauso wie der Rücklaufstutzen 27 bzw. 27' in jeweils einem im Boden des Ausgleichsbehälters 6 angeordnetem Aufnahmestutzen. Dieser Sachverhalt wurde zeichnerisch in Fig. 2 angedeutet. Die Fig. 2 zeigt ferner, daß der Ausgleichbehälter 6 über mehrere geeignete Befestigungspunkte 12 an der Montageplatte 2 befestigt ist. Die Fig. 2 und 3 zeigen den auf der zum Wasserkühler weisenden Seite der Montageplatte vorgesehenen Anschlußstutzen 28, der in die Anschlußöffnung 29 des einen Wasserkastens 22 des Wasserkühlers 3 einsetzbar ist. Die Anschlußöffnung 29 ist in Fig.1 eingezeichnet.
Bei der Fig. 3 handelt es sich um ein gemeinsames Bauteil, bestehend aus Montageplatte 2 und Ventilatorhaube 1. Hier wurde der Ausgleichsbehälter 6 nicht eingezeichnet. Dargestellt ist der die Automatikversion kennzeichnende Deckel 15, der vorzugsweise ebenfalls ein Spritzgußteil aus Kunststoff ist. Dessen Hauptbestandteile sind der Aufnahmestutzen 4, in dem sich eine Ventileinheit befindet (nicht gezeichnet), die mit dem Aufnahmestutzen 4 in den Boden des Ausgleichsbehälters 6 eingesetzt wird. Ferner die den Befestigungspunkt 5 bildende Anschlußbuchse 18 für den nicht gezeichneten Wärmetauscher 7 sowie dessen Kühlwasseranschlüsse 16; 17 mit den Anschlußbuchsen 18; 19.
Es soll durchaus im Rahmen der Erfindung liegen, die Ventilatorhaube 1 im Bedarfsfall noch umfangreicher als in den Fig. gezeigt und bisher erläutert wurde als Montageplatte 2 auszubilden. Beispielsweise könnte der in den Fig. 1 und 3 gezeigte rechte untere Bereich (Bezugszeichen 1 in Fig. 1) der Ventilatorhaube leicht mit einem zusätzlichen wassergekühlten Kühler versehen werden, der dann in Verbindung mit dem rechten Wasserkasten 22 des Wasserkühlers 3 stehen könnte.

### Liste der verwendeten Bezugszeichen

- 1: Ventilatorhaube
- 2: Montageplatte
- 3: Wasserkühler
- 4: Anschlußstutzen
- 4': Anschlußstutzen für Variante ohne Wärmetauscher 7
- 5: Befestigungspunkt für Wärmetauscher
- 6: Ausgleichsbehälter
- 7: Wärmetauscher (Ölkühler)
- 8: Strömungskanäle
- 9: Nahtstelle
- 10: Versteifungsrippen
- 11: Trägerseite
- 12: Befestigungspunkte für Ausgleichsbehälter
- 13: Wände von 8
- 14: Boden von 8
- 15: Deckel auf 8
- 16: Anschluß für Kühlwassereinlaß an 15
- 17: Anschluß für Kühlwasserauslaß an 15
- 18: Anschlußbuchse an Deckel 15 für Warmetauscher 7
- 19: Anschlußbuchse für 16
- 20: Anschlußbuchse für 17
- 21: Verbindungselemente
- 22: Wasserkasten
- 23: Kühlwasserzulauf
- 24: Kühlwasserablauf
- 25: Öffnung in Ventilatorhaube 1
- 26: Halteteil an 4'
- 27: Rücklaufstutzen
- 27': Rücklaufstutzen zu Variante 4'
- 28: Anschlußstutzen an Montageplatte
- 29: Anschlußöffnung in Wasserkasten 22

## Patentansprüche

1. Kühlmodul für flüssigkeitsgekühlte Verbrennungskraftmaschinen von Kraftfahrzeugen mit Schalt-oder Automatikgetriebe, bestehend aus einem zentralen Wasserkühler (3), der von einer Ventilatorhaube (1) eingerahmt ist, die zumindest partiell als Montageplatte (2) ausgebildet ist, die zum Wasserkühler hin die Funktion der Ventilatorhaube besitzt und auf der entgegengesetzten Seite als Träger von Komponeten des Kühlmoduls dient,
dadurch gekennzeichnet, daß die Montageplatte (2) zumindest den Boden (14) von Strömungskanälen (8) für die Kühlflüssigkeit aufweist, die in Verbindung mit einem Wasserkasten (22) des Wasserkühlers (3) und mit einem in unmittelbarer Nähe anbringbaren weiteren Wärmetauscher (7) stehen.

2. Kühlmodul nach Anspruch 1, dadurch gekennzeichnet, daß die Ventilatorhaube (1) und die Montageplatte (2) zwei einzelne Bauteile sind, die an einer Nahtstelle (9) abdichtend aneinander liegen, wobei die Ventilatorhaube (1) und die Montageplatte (2) vorzugsweise an dem Wasserkühler (3) befestigt sind.

3. Kühlmodul nach Anspruch 1, dadurch gekennzeichnet, daß Ventilatorhaube (1) und Montageplatte (2) ein einziges Bauteil darstellen, das vorzugsweise an dem Wasserkühler (3) befestigt ist.

4. Kühlmodul nach einem der Ansprüche 1 bis 3, dadurch gekennzeichnet, daß die Montageplatte (2) auf der Trägerseite (11) mit sich kreuzenden Versteifungsrippen (10) versehen ist.

5. Kühlmodul nach einem der vorstehenden Ansprüche, dadurch gekennzeichnet, daß die Montageplatte (2) als Träger eines Anschlußstutzens (4) für eine Ventileinheit und für einen Ausgleichsbehälter (6) des Wasserkühlers (3) mit Befestigungspunkten (12) für den Ausgleichsbehälter (6) ausgebildet ist.

6. Kühlmodul, für Kraftfahrzeuge mit Automatikgetriebe, nach einem der vorstehenden Ansprüche, dadurch gekennzeichnet, daß an der zum Wasserkühler (3) weisenden Seite der Montageplatte (2) ein Anschlußstutzen (28) angeformt ist, der in eine Anschlußöffnung (29) des Wasserkastens (22) des Wasserkühlers (3) einsteckbar ist und in Verbindung mit den Strömungskanälen (8) ist.

7. Kühlmodul, für Kraftfahrzeuge mit Schaltgetriebe, nach einem der Ansprüche 1 bis 5, dadurch gekennzeichnet, daß an der zum Wasserkühler (3) weisenden Seite der Montageplatte (2) ein blindgesetzter Anschlußstutzen (28) angeformt ist, der in eine Anschlußöffnung (29) des Wasserkastens (22) des Wasserkühlers (3) einsteckbar ist.

8. Kühlmodul, für Kraftfahrzeuge mit Automatikgetriebe, nach einem der vorstehenden Ansprüche, dadurch gekennzeichnet, daß die Montageplatte (2) mit einem Befestigungspunkt (5) für den Wärmetauscher (7) versehen ist, der als gehäuseloser Öl - Wasser - Wärmetauscher mit einer Grundplatte ausgebildet ist.

9. Kühlmodul, für Kraftfahrzeuge mit Automatikgetriebe, nach einem der vorstehenden Anspruch , dadurch gekennzeichnet, daß die Strömungskanäle (8) durch an die Montageplatte (2) angespritzte Wände (13) mit dem Boden (14) gebildet sind und mittels eines Deckels (15), aufgeschoben oder aufgeschweißt, komplettiert sind, wobei der Deckel (15) Anschlüsse (16;17) für den Kühlflüssigkeitseintritt und - austritt aus dem Wärmetauscher (7) aufweist.

10. Kühlmodul, für Kraftfahrzeuge mit Automatikgetriebe, nach einem der vorstehenden Ansprüche 1 bis 8, dadurch gekennzeichnet, daß die Wände (13) der Strömungskanäle (8) in dem Deckel (15) eingearbeitet sind und der Deckel (15) an der Montageplatte (2) vorzugsweise angeschweißt ist.

11. Kühlmodul, für Kraftfahrzeuge mit Automatikgetriebe, nach Anspruch 8, dadurch gekennzeichnet, daß der Befestigungspunkt (5) aus einem etwa mittig an der Grundplatte des Wärmetauschers (7) angeformten Zapfen, mit einer umlaufenden Nut gebildet ist, der in einer Anschlußbuchse (18) am Deckel (15) mittels einer Feder einrastbar ist.

12. Kühlmodul, für Kraftfahrzeuge mit Automatikgetriebe, nach Anspruch 9, dadurch gekennzeichnet, daß die Anschlüsse (16;17) Steckanschlüsse sind, bestehend aus am Deckel (15) angeordneten Anschlußbuchsen (19;20), die die mit einem O-Ring versehenen, an der Grundplatte angeordneten Anschlußstutzen des Wärmetauschers (7) abdichtend aufnehmen.

## Claims

1. Cooling module for liquid-cooled internal combustion engines of motor vehicles having a manual gear shift or automatic gearbox comprising a central water cooler (3) which is surrounded by a fan hood (1) which is designed at least partially as a mounting plate (2) which has the function of a fan hood with regard to the water cooler and on the opposite side serves as a carrier for components of the cooling module, characterized in that the mounting plate (2) has at least the base (14) of flow ducts (8) for the cooling fluid which are connected to a water box (22) of the water cooler (3) and to a further heat exchanger (7) which can be attached in the direct vicinity.

2. Cooling module according to Claim 1, characterized in that the fan hood (1) and the mounting plate (2) are two individual components which bear one against the other in a seal-forming fashion at a joint (9), the fan hood (1) and the mounting plate (2) being preferably attached to the water cooler (3).

3. Cooling module according to Claim 1, characterized in that the fan hood (1) and mounting plate (2) constitute a single component which is preferably attached to the water cooler (3).

4. Cooling module according to one of Claims 1 to 3, characterized in that the mounting plate (2) is provided with intersecting reinforcement ribs (10) on the carrier side (11).

5. Cooling module according to one of the preceding claims, characterized in that the mounting plate (2) is designed as a carrier of a connecting element (4) for a valve unit and for an equalization vessel (6) of the water cooler (3) with attachment points (12) for the equalization vessel (6).

6. Cooling module for motor vehicles with an automatic gearbox, according to one of the preceding claims, characterized in that a connecting element (28) which can be plugged into a connecting opening (29) of the water box (22) of the water cooler (3) and is connected to the flow ducts (8) is formed onto the side of the mounting plate (2) which faces the water cooler (3).

7. Cooling module for motor vehicles with a manual gearshift, according to one of Claims 1 to 5, characterized in that a blanked connecting element (28) which can be plugged into a connecting opening (29) of the water box (22) of the water cooler (3) is formed onto the side of the mounting plate (2) which faces the water cooler (3).

8. Cooling module for motor vehicles with an automatic gearbox, according to one of the preceding claims, characterized in that the mounting plate (2) is provided with an attachment point (5) for the heat exchanger (7) which is designed as a housingless oil/water/heat exchanger with a base plate.

9. Cooling module for motor vehicles with an automatic gearbox, according to one of the preceding claims, characterized in that the flow ducts (8) are formed by means of walls (13) which are formed by injection moulding on the mounting plate (2), with the base (14), and are completed by means of a lid (15), which is pushed on or welded on, the lid (15) having ports (16; 17) for the cooling fluid to enter and leave the heat exchanger (7).

10. Cooling module for motor vehicles with an automatic gearbox, according to one of the preceding Claims 1 to 8, characterized in that the walls (13) of the flow ducts (8) are formed in the lid (15), and the lid (15) is preferably welded onto the mounting plate (2).

11. Cooling module for motor vehicles with an automatic gearbox, according to Claim 8, characterized in that the attachment point (5) is formed from a pin which is formed onto the base plate of the heat exchanger (7) approximately in the centre, with a circumferential groove, it being possible to engage said pin in a connecting bush (18) on the lid (15) by means of a spring.

12. Cooling module for motor vehicles with an automatic gearbox, according to Claim 9, characterized in that the ports (16; 17) are plug-type ports, comprising of connecting bushes (19; 20) which are arranged on the lid (15) and hold in a seal-forming fashion the connecting elements of the heat exchanger (7) which are provided with an O-ring and are arranged on the base plate.

## Revendications

1. Module de refroidissement pour machines a combustion interne refroidies par liquide de véhicules à transmission à changement de vitesses ou automatique, se composant d'un radiateur central (3) encadré par une enveloppe de ventilateur (1), qui est conçue au moins partiellement en tant que plaque de montage (12) possédant la fonction d'enveloppe de ventilateur du côté du radiateur et servant de support pour des composants du module de refroidissement de l'autre côté,
caractérisé en ce que la plaque de montage (2) présente au moins le fond (14) de canaux d'écoulement (8) pour le liquide de refroidissement qui sont connectés à un réservoir d'eau (22) du radiateur (3) et à un autre échangeur de chaleur (7) pouvant être amené à proximité immédiate.

2. Module de refroidissement selon la revendication 1, caractérisé en ce que l'enveloppe de ventilateur (1) et la plaque de montage (2) sont deux pièces individuelles, qui reposent l'une contre l'autre de manière étanche au niveau d'une jonction (9), l'enveloppe de ventilateur (1) et la plaque de montage (2) étant de préférence fixées au radiateur (3).

3. Module de refroidissement selon la revendication 1, caractérisé en ce que l'enveloppe de ventilateur (1) et la plaque de montage (2) constituent une pièce unique, qui est de préférence fixée au radiateur (3).

4. Module de refroidissement selon l'une quelconque des revendications 1 à 3, caractérisé en ce que la plaque de montage (2) est pourvue du côté porteur (11) de nervures de renforcement croisées (10).

5. Module de refroidissement selon l'une quelconque des revendications précédentes, caractérisé en ce que la plaque de montage (2) est conçue en tant que support d'un raccord (4) pour une unité de soupape et pour un réservoir de compensation (6) du radiateur (3) avec des points de fixation (12) pour le réservoir de compensation (6).

6. Module de refroidissement pour véhicules à transmission automatique, selon l'une quelconque des revendications précédentes, caractérisé en ce que du côté de la plaque de montage (2) tourné vers le radiateur (3) est formé un raccord (28) qui peut être inséré dans une ouverture de raccordement (29) du réservoir d'eau (22) du radiateur (3) et qui est connecté aux canaux d'écoulement (8).

7. Module de refroidissement pour véhicules à transmission à changement de vitesses selon l'une quelconque des revendications 1 à 5, caractérisé en ce que du côté de la plaque de montage (2) tourné vers le radiateur (3), est formé un raccord aveugle (28), qui peut être inséré dans une ouverture de raccordement (29) du réservoir d'eau (22) du radiateur (3).

8. Module de refroidissement pour véhicules à transmission automatique selon l'une quelconque des revendications précédentes, caractérisé en ce que la plaque de montage (2) est pourvue d'un point de fixation (5) pour l'échangeur de chaleur (7), qui est conçu en tant qu'échangeur de chaleur huile-eau sans boîtier avec une plaque de base.

9. Module de refroidissement pour véhicules à transmission automatique selon l'une quelconque des revendications précédentes, caractérisé en ce que les canaux d'écoulement (8) sont formés par des parois (13) formées par injection sur la plaque de montage (2) avec le fond (14) et sont complétés au moyen d'un couvercle (15), enfoncé ou soudé par-dessus, le couvercle (15) présentant des raccords (16, 17) pour l'entrée et la sortie du liquide de refroidissement dans l'échangeur de chaleur (7).

10. Module de refroidissement pour véhicules à transmission automatique selon l'une quelconque des revendications précédentes 1 à 8, caractérisé en ce que les parois (13) des canaux d'écoulement (8) sont formées d'une pièce dans le couvercle (15) et le couvercle (15) est de préférence soudé sur la plaque de montage (2).

11. Module de refroidissement pour véhicules à transmission automatique selon la revendication 8, caractérisé en ce que le point de fixation (5) est formé d'un tourillon formé approximativement au milieu de la plaque de base de l'échangeur de chaleur (7), avec une rainure périphérique, qui peut être engagée dans une douille de raccord (18) sur le couvercle (15) au moyen d'un ressort.

12. Module de refroidissement pour véhicules à transmission automatique selon la revendication 9, caractérisé en ce que les raccords (16, 17) sont des raccords embrochables, se composant de douilles de raccord (19, 20) disposées sur le couvercle (15), qui reçoivent de manière étanche les raccords de l'échangeur de chaleur (7) pourvus d'un joint torique et disposés sur la plaque de base.
